## Europäisches Patentamt
## European Patent Office
## Office européen des brevets

(19)

(11) Veröffentlichungsnummer: **0 195 206**

**B1**

(12)

# EUROPÄISCHE PATENTSCHRIFT

(45) Veröffentlichungstag der Patentschrift:
08.03.89

(51) Int. Cl.⁴: **F 16 K 31/42**, F 16 K 31/40

(21) Anmeldenummer: 86101226.8

(22) Anmeldetag: 30.01.86

(54) Vorgesteuertes Ventil.

(30) Priorität: 22.03.85 CH 1273/85

(43) Veröffentlichungstag der Anmeldung:
24.09.86 Patentblatt 86/39

(45) Bekanntmachung des Hinweises auf die Patenterteilung:
08.03.89 Patentblatt 89/10

(84) Benannte Vertragsstaaten:
BE CH DE LI SE

(56) Entgegenhaltungen:
CH-A-578 703
DE-A-3 029 394
DE-B-1 033 964
FR-A-1 306 061
GB-A-556 547
US-A-2 624 542

(73) Patentinhaber: GEBRÜDER SULZER AKTIENGESELLSCHAFT, Zürcherstrasse 9, CH-8401 Winterthur (CH)

(72) Erfinder: Tiefenthaler, Edelbert, Schützenhausstrasse, CH-8353 Elgg (CH)

(74) Vertreter: Dipl.- Ing. H. Marsch Dipl.- Ing. K. Sparing Dipl.- Phys.Dr. W.H. Röhl Patentanwälte, Rethelstrasse 123, D-4000 Düsseldorf 1 (DE)

EP 0 195 206 B1

## Beschreibung

Die Erfindung betrifft ein von der Energie des Eigenmediums betätigbares, durch einen Hilfsverschlussteil vorgesteuertes Ventil mit einem Gehäuse, das eine Druckkammer und einen ersten Ventilsitz aufweist und das an mindestens eine Mediumquelle und mindestens eine Mediumsenke angeschlossen ist, und mit einem im Gehäuse verschiebbar geführten und mit dem ersten Ventilsitz zusammenwirkenden Hauptverschlussteil, wobei der durch Antriebsmittel antreibbare Hilfsverschlussteil in einer innerhalb des Hauptverschlussteils enthaltenen Ventilkammer, diese in zwei Teilkammern unterteilend, koaxial verschiebbar zum Hauptverschlussteil geführt ist, wobei die Ventilkammer über mindestens eine Öffnung mit der stromoberhalb des ersten Ventilsitzes angeordneten Druckkammer verbunden ist, wobei ferner im Hauptverschlussteil mindestens eine Durchlassöffnung vorhanden ist, die die Ventilkammer mit einem stromunterhalb des ersten Ventilsitzes angeordneten Raum verbindet, wobei der Hilfsverschlussteil im Hauptverschlussteil zwischen einer Schließstellung, in der er, mit einem zweiten Ventilsitz zusammenwirkend, die Durchlassöffnung schliesst, und einer die Durchlassöffnung freigebenden Offenstellung bewegbar ist und wobei der Hilfsverschlussteil Mittel aufweist, die in seiner Offenstellung die Öffnung zwischen der Ventilkammer und der Druckkammer mindestens teilweise verschliessen.

Aus der DE-A-3 029 394 ist ein Ventil dieser Art bekannt, das auch bei grossen Ventilabmessungen durch geringe Kräfte zuverlässig und rasch betätigt werden kann. Dieses Ventil wird häufig in hydraulischen Steuerungen von Sicherheitssystemen beispielsweise für Dampferzeuger, verwendet. Bei der Auslegung des bekannten Ventils hat es sich jedoch gezeigt, dass im Falle von Leckagen im Bereich des zweiten Ventilsitzes, der Druck in der Ventilkammer so weit sinken kann, dass der Hauptverschlussteil ungewollt öffnet.

Es ist daher Aufgabe der Erfindung, das Ventil der eingangs genannten Art auf einfache und kostengünstige Weise, ohne Beeinträchtigung seines Öffnungs- und Schliessverhaltens, so zu verbessern, dass Undichtheiten im Bereich des zweiten Ventilsitzes auf keinen Fall zu einem Öffnen des Hauptverschlussteils führt.

Diese Aufgabe wird erfindungsgemäss dadurch gelöst, dass der Hilfsverschlussteil einen Verbindungsraum aufweist, der nur in der schließstellung des Hilfsverschlussteils in die Öffnung zwischen der ventilkammer und der Druckkammer mündet und dass mindestens eine ständige Verbindung zwischen den beiden Teilkammern nur über den Verbindungsraum besteht.

Durch diese Gestaltung wirkt der Verbindungsraum bei geschlossenem Hilfsverschlussteil als Mediumverteiler für die beiden Teilkammern und somit auch als Puffer, der bei etwaigen Leckagen des zweiten Ventilsitzes ein Ausdehnen des tieferen Druckes von der dem zweiten Ventilsitz benachbarten Teilkammer auf die andere Teilkammer verhindert. Der verbleibende hohe Druck in der anderen Teilkammer gewährleistet dann das Ausharren des Hauptverschlussteils in der Schließstellung. Bei regulär offenem Hilfsverschlussteil dagegen besteht keine Verbindung des Verbindungsraumes mit der Druckkammer, so dass dann die Mediumverteilwirkung des Verbindungsraumes praktisch aufgehoben ist. Da beim erfindungsgemässen Ventil die Mittel kolbenartig ausgebildet sind, ist es wesentlich kostengünstiger als das bekannte Ventil, bei dem die Mittel als Doppelsitz gestaltet sind.

Ein zusätzlicher Vorteil der Erfindung besteht darin, dass durch Abstimmen der Drosselwirkungen der ständigen Verbindungen zwischen dem Verbindungsraum und den beiden Teilräumen das Stellverhalten des Ventils auf einfache und übersichtliche Weise optimiert werden kann. Beim bekannten ventil dagegen ist ein solches Optimieren sehr kompliziert, da einerseits die beiden Teilräume bei geschlossenem Hilfsverschlussteil direkt dem Hilfsverschlussteil entlang miteinander verbunden sind, welche Verbindung bei offenem Hilfsverschlussteil unterbrochen ist, und andererseits eine ständige direkte Verbindung der beiden Teilräume ausserhalb des Hilfsverschlussteils besteht. Beim neuen Ventil sind also nur ständige Verbindungen der beiden Teilkammern über den Verbindungsraum im Hilfsverschlussteil vorhanden.

Ein Ausführungsbeispiel der Erfindung wird in der folgenden Beschreibung anhand der Zeichnung näher erläutert. Es zeigen:

Fig. 1    einen schematischen Längsschnitt eines Ventils nach der Erfindung, in geschlossener Stellung, die auch die Sicherheitsstellung des Ventils ist, und

Fig. 2    das Ventil in offener Stellung.

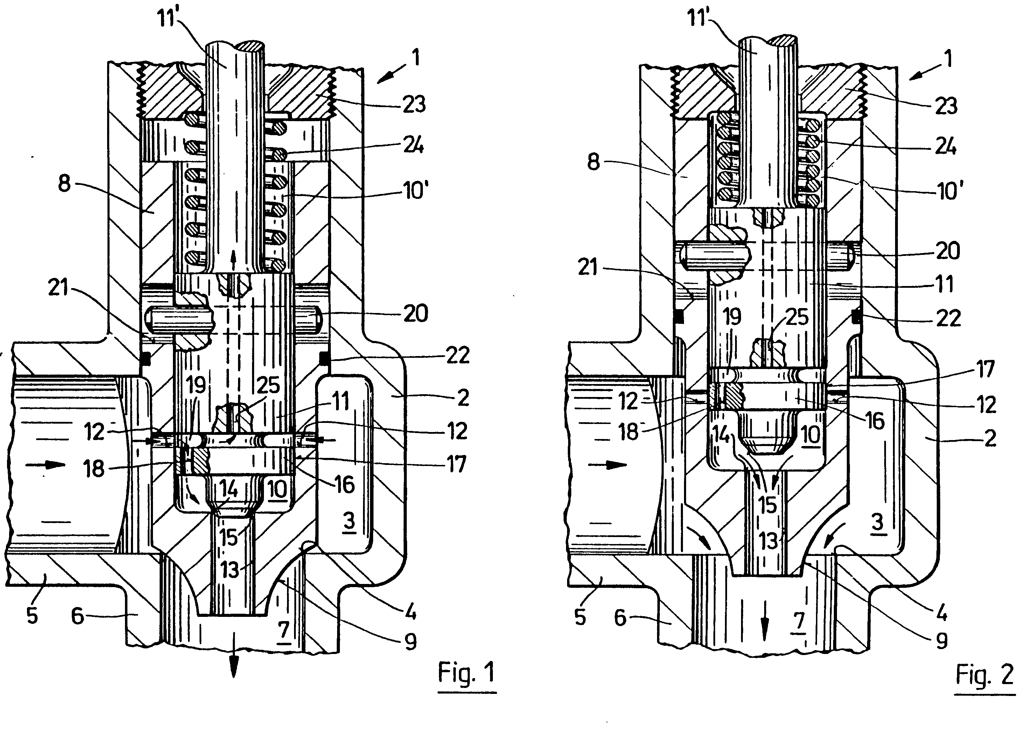

Gemäss Fig. 1 und 2 hat das von der Energie des Eigenmediums betätigte, vorgesteuerte Dampfventil 1 ein Gehäuse 2, das eine Druckkammer 3 und einen ersten ringförmigen Ventilsitz 4 aufweist. Es ist mittels eines horizontalen Eintrittsstutzens 5 mit einer nicht gezeigten Dampfquelle und mittels eines vertikalen Austrittsstutzens 6 mit einer ebenfalls nicht gezeigten Dampfsenke verbunden. Im Gehäuse 2 ist koaxial zum Austrittsstutzen 6 ein Hauptverschlussteil 8 geführt, dessen unteres Ende eine im wesentlichen von einer torusförmigen Fläche 9 begrenzt ist, die mit dem ersten Ventilsitz 4 zusammenwirkt. Der hohl ausgebildete Hauptverschlussteil 8 enthält eine Ventilkammer 10, in der ein Hilfsverschlussteil 11 koaxial zum Austrittsstutzen 6 verschiebbar geführt ist. Sechs über den Umfang des Verschlussteiles 8 verteilte, radiale Öffnungen 12 verbinden die Ventilkammer 10 mit der stromoberhalb des ersten Ventilsitzes 4 angeordneten Druckkammer 3, und eine zum Austrittsstutzen 6 koaxiale Durchlassöffnung 13 im Verschlussteil 8 verbindet die Ventilkammer 10 mit dem stromunterhalb des ersten Ventilsitzes 4 befindlichen Raum 7. Das der Ventilkammer 10 zugewendete Ende der Durchlassöffnung 13 ist als ein zweiter Ventilsitz 14 ausgebildet und wirkt mit einer konischen Dichtfläche 15 am unteren Ende des Hilfsverschlussteils 11 zusammen. Der Hilfsverschlussteil 11 weist als obere Begrenzung der Ventilkammer 10 einen Flansch 16 auf, dessen äussere, zum Austrittsstutzen 6 koaxiale zylindrische Umfangsfläche 17 eine axiale Länge hat, die grösser als der Durchmesser der Öffnungen 12 ist. Der Flansch 16 ist so angeordnet, dass er bei geschlossener Durchlassöffnung 13 unterhalb der Öffnungen 12 steht und diese nicht bedeckt, wogegen er bei geöffneter Durchlassöffnung 13 die Öffnungen 12 überdeckt. Der Flansch 16 ist mit sechs axialen Bohrungen 18 versehen, die die Ventilkammer 10 mit einem Ringraum 19 oberhalb des Flansches 16 verbinden. Zwei achsparallele Bohrungen 25 im oberen Bereich des Verschlussteils 11 sichern einen raschen Druckausgleich zwischen dem Ringraum 19 und der oberhalb des Verschlussteils 11 befindlichen Kammer 10'. Ferner wird der Hilfsverschlussteil 11 von einem radialen Zapfen 20 durchdrungen, dessen beide Enden in je einen axialen Schlitz 21 des Hauptverschlussteils 8 hineinragen, wodurch die Verschiebbarkeit des Hilfsverschlussteils 11 relativ zum Hauptverschlussteil 8 nach oben hin begrenzt wird. Ein Dichtring 22 in einer Ringnut des Hauptverschlussteils 8 dichtet die Druckkammer 3 gegen den oberen Teil des Gehäuses 2 ab. Eine mittels Gewinde in diesem Gehäuseteil befestigte Buchse 23 begrenzt die verschiebbarkeit des Hauptverschlussteils 8 nach oben und stützt zugleich eine Schraubenfeder 24 ab, deren unteres Ende auf dem oberen Ende des Hilfsverschlussteils 11 ruht. Ein nicht gezeigter Elektromagnet ist auf dem Gehäuse 2 befestigt und wirkt, auf bekannte Weise, über eine Stange 11' auf den Hilfsverschlussteil 11 derart, dass bei eingeschaltetem Strom der Hilfsverschlussteil gegen das Eigengewicht und gegen die Feder 24 aus der in Fig. 1 gezeigten Schließstellung - die seine Sicherheitsstellung ist - wegbewegt wird.

Das Dampfventil nach Fig. 1 und 2 funktioniert wie folgt.

Im Normalbetrieb befinden sich die Verschlussteile 8 und 11 des Dampfventils 1 in der in Fig. 1 gezeigten Schliessstellung, die die Sicherheitsstellung ist. Der Elektromagnet ist dabei stromlos. Dampf aus der Druckquelle befindet sich im Eintrittsstutzen 5 und über die Öffnungen 12 auch in dem Ringraum 19 sowie über die Bohrungen 18 und 25 in der Ventilkammer 10 und im Raum 10', so dass sich der gleiche Druck ober- und unterhalb des Verschlussteils 11 einstellt. Ein Druckunterschied herrscht dagegen zwischen der Ventilkammer 10 und dem darunterliegenden Raum 7 im Austrittsstutzen 6.

Wird nun der Elektromagnet an eine Stromquelle angeschlossen, so wird der Hilfsverschlussteil 11 entgegen seinem Eigengewicht und der Wirkung der Feder 24 nach oben bewegt (Fig. 2), wobei die Durchlassöffnung 13 freigegeben wird und die Öffnungen 12 vom Flansch 16 überdeckt werden. Die Dampfzufuhr durch die Öffnungen 12 wird somit unterbunden und der Dampf aus der Ventilkammer 10 und dem Raum 10' strömt über die Durchlassöffnung 13 und den Austrittsstutzen 6 zur Dampfsenke hin. Dadurch ändert sich die am Hauptverschlussteil 8 wirkende Druckdifferenz und hebt diesen Verschlussteil entgegen seinem Eigengewicht vom Ventilsitz 4 ab.

Bei einem Abfallen des Dampfdruckes in der Druckkammer 3 bewegt sich Hauptverschlussteil 8 unter der Wirkung des Eigengewichts der beweglichen Teile und der Kraft der Feder 24 stets in seine Sicherheitsstellung zurück. Bei einem Stromloswerden des Elektromagneten verbleibt der geschlossene Hauptverschlussteil 8 in dieser Stellung, was auch bei einem Bruch der Feder 24 der Fall ist, da das Eigengewicht genügt, um die Schließstellung herbeizuführen.

Entgegen dem bekannten Ventil kann hier wegen des Flansches 16 bei offenem Hilfsverschlussteil 11 nur eine unwesentliche Dampfmenge in den Ventilraum 10 einströmen, so dass die Öffnungen 12 grösser dimensioniert werden können. Dies bedeutet, dass sie in ungedrosseltem Zustand - wenn die Durchlassöffnung 13 wieder geschlossen ist - eine grosse Dampfmenge in die Ventilkammer 10 leiten, die einen raschen Druckanstieg in der Ventilkammer 10 zur Folge hat, so dass nach dem Auftreffen des Verschlussteils 8 auf den ersten Ventilsitz 4 ein Zurückschlagen dieses Verschlussteils verhindert wird. Das erfindungsgemässe Ein- und Ausschalten der Öffnungen 12 führt zu rascheren Reaktionen des Dampfventils 1 auf das Ein- und Ausschalten des Elektromagneten und schafft demzufolge eindeutige Bewegungsabläufe des Hauptverschlussteils 8.

Die Erfindung ist nicht auf das beschriebene Ausführungsbeispiel beschränkt. So kann die Anordnung von Eintritts- und Austrittsstutzen zueinander und zum ersten Ventilsitz anders sein, wie auch die Beziehung zwischen Sicherheitsstellung und Mediumstromrichtung. Obwohl es nicht als ideal anzusehen ist, kann das Eigengewicht der Verschlussteile auch im Sinne "weg von der Sicherheitsstellung" wirken; gegebenenfalls könnte ein anderes, grösseres Gewicht vorgesehen werden, das mittelbar oder unmittelbar dem Eigengewicht der beweglichen Teile entgegenwirkt.

Im Sinne einer grösseren Betriebssicherheit können die Antriebsmittel des Hilfsverschlussteils mehrfach redundant vorgesehen werden, zum Beispiel in Form zweier konzentrischer Spiralfedern oder zweier voneinander unabhängig wirkender Magnetventile. Anstelle von Magnetventilen können auch andere Antriebsmittel gewählt werden, beispielsweise pneumatische oder hydraulische Zylinder, mit Eigenmedium betriebene Servomotoren, elektrische Motoren und auch Handbetrieb, letzterer mindestens als Notantrieb. Auch die erfindungsgemässen Mittel zum Verschliessen der Öffnungen 12 können mehrfach redundant ausgeführt werden. Anstelle von Schraubenfedern können auch Tellerfedern verwendet werden. Schliesslich kann das Ventil auch von flüssigen Medien durchströmt sein.

Abweichend von den beschriebenen Ausführungsbeispielen ist es auch möglich, dass die Mittel zum Verschliessen der Öffnung zwischen Ventilkammer und Druckkammer so ausgebildet sind, dass sie den Mediumübertritt von der Druckkammer zur Ventilkammer stark drosseln.

**Patentansprüche**

1. Von der Energie des Eigenmediums betätigbares, durch einen Hilfsverschlussteil (11) vorgesteuertes Ventil (1) mit einem Gehäuse (2), das eine Druckkammer (3) und einen ersten Ventilsitz (4) aufweist und das an mindestens eine Mediumquelle und mindestens eine Mediumsenke angeschlossen ist, und mit einem im Gehäuse verschiebbar geführten und mit dem ersten Ventilsitz (4) zususammenwirkenden Hauptverschlussteil (8), wobei der durch Antriebsmittel antreibbare Hilfsverschlussteil (11) in einer innerhalb des Hauptverschlussteils (8) enthaltenen Ventilkammer (10), diese in zwei Teilkammern unterteilend, koaxial verschiebbar zum Hauptverschlussteil (8) geführt ist, wobei die Ventilkammer (10) über mindestens eine Öffnung (12) mit der stromoberhalb des ersten Ventilsitzes (4) angeordneten Druckkammer (3) verbunden ist, wobei ferner im Hauptverschlussteil (8) mindestens eine Durchlassöffnung (13) vorhanden ist, die die Ventilkammer (10) mit einem stromunterhalb des ersten Ventilsitzes (4) angeordneten Raum (7) verbindet, wobei der Hilfsverschlussteil (11) Hauptverschlussteil (8) zwischen einer Schließstellung, in der er, mit einem zweiten Ventilsitz (14) zusammenwirkend, die Durchlassöffnung (13) schliesst, und einer die Durchlassöffnung (13) freigebenden Offenstellung bewegbar ist und wobei der Hilfsverschlussteil (11) Mittel aufweist, die in seiner Offenstellung die Öffnung (12) zwischen der Ventilkammer (10) und der Druckkammer (3) mindestens teilweise verschliessen, dadurch gekennzeichnet, dass der Hilfsverschlussteil einen Verbindungsraum (19) aufweist, der nur in der Schließstellung des Hilfsverschlussteils (11) in die Öffnung (12) zwischen der Ventilkammer (10) und der Druckkammer (3) mündet und dass mindestens eine ständige Verbindung (18, 25) zwischen den beiden Teilkammern nur über den Verbindungsraum (19) besteht

2. Ventil nach Anspruch 1, wobei die eine der beiden Endstellungen des Hauptverschlussteils (8) eine Sicherheitsstellung ist, dadurch gekennzeichnet, dass als Antriebsmittel in die Sicherheitsstellung mindestens das Eigengewicht des Hilfsverschlussteils (11) wirkt.

3. Ventil nach Anspruch 2, dadurch gekennzeichnet, dass das Ventil so ausgelegt ist, dass bei geschlossenem Hilfsverschlussteil (11) das Eigenmedium den Hauptverschlussteil (8) in seine Sicherheitsstellung bewegt.

4. Ventil nach einem der Ansprüche 1 bis 3, dadurch gekennzeichnet, dass die Antriebsmittel aus mindestens einem Elektromagneten und mindestens einer dagegen wirkenden Feder bestehen.

5. Ventil nach Anspruch 4, dadurch gekennzeichnet, dass die Feder in Richtung auf die Sicherheitsstellung wirkt.

6. Ventil nach Anspruch 1, dadurch gekennzeichnet, dass die Mittel eine kolbenartige Fläche (16) aufweisen, die in der Offenstellung des Hilfsverschlussteils (11) die Mündung der Öffnung (12) in die Ventilkammer (10) überdeckt.

**Claims**

1. A valve (1) acuatable by own-medium energy and piloted by a pilot closure member (11) and having: a body (2) having a pressure chamber (3) and a first valve seat (4) connected to at least one medium source and to at least one medium sink; and a main closure member (8) displaceably guided in the body (2) and cooperating with the first valve seat (4), the pilot closure member (11) being drivable by driving means and being guided for movement coaxial to the main closure member (8) in a valve chamber (10) which is disposed in the main closure member (8) and sub-divides the same into two sub-chambers, the valve chamber (10) communicating by way of at least one orifice (12) with the pressure chamber (3) which is upstream of the first valve seat (4), the main closure member (8) also being formed with at least one passage (13) connecting the valve chamber (10) to a chamber (7) disposed downstream of the first valve seat (4), the pilot closure member (11), being movable in the main closure member (8) between a closed position, in which the pilot closure member (11) in cooperation with a second valve seat (14), closes the passage (13) and an open position opening the passage (13) the pilot closure member (11) having means providing at least a partial closure, when the pilot closure member (11) is in its open position, of the passage (12) between the valve chamebr (10) and the pressure chamber (3), characterised in that the pilot closure member (11) has a connecting chamber (19) which extends - but only in the closed position of the pilot closure member (11) - into the passage (12) between the valve chamber (10) and the pressure chamber (3), and at least one permanent communication (18, 25) between the two sub-chambers exists only by way of the connecting chamber (19).

2. A valve according to claim 1, one of the two end positions of the main closure member (8) being a safety position, characaterised in that at least the own-weight of the pilot closure member (11) is operative as means for driving the main closure member (8) into the safety position.

3. A valve according to claim 2, characterised in that the valve is so designed that with the pilot closure member (11) closed, the own-medium moves the main closure member (8) into its safety positon.

4. A valve according to any of claims 1 to 3, characterised in that the driving means are embodied by at least one electromagnet and at least one spring acting thereagainst.

5. A valve according to claim 4, characterised in that the spring is operative in the direction towards the safety position.

6. A valve according to claim 1, characterised in that the manes have a piston-like surface (16) which, with the pilot closure member (11) in its open position, masks the opening of the passage (12) into the valve chamber (10).


**Revendications**

1. Soupape (1) actionnable par l'énergie de son propre fluide et pré-commandée par une partie de fermeture auxiliaire (11), comportant un boîtier (2) qui présente une chambre de pression (3) et un premier siège de soupape (4) et qui est raccordé à au moins une source de fluide et au moins une décharge de fluide, et une partie principale de fermeture (8) guidée de façon à pouvoir se déplacer dans le boîtier et coopérant avec le premier siège de soupape (4), la partie de fermeture auxiliaire (11) pouvant être commandée par un moyen de commande étant alors guidée dans une chambre de soupape (10) contenue à l'intérieur de la partie principale de fermeture (8) en subdivisant celle-ci en deux chambres partielles et en pouvant se déplacer coaxialement par rapport à la partie principale de fermeture (8), la chambre de soupape (10) étant connectée par l'intermédiaire d'au moins un orifice (12) à la chambre de pression (3) disposée en amont du premier siège de soupape (4), et au moins un orifice de passage (13) étant présent dans la partie de fermeture principale (8), cet orifice reliant la chambre de soupape (10) à un espace (7) disposé en aval du premier siège de soupape (4), la partie auxiliaire de fermeture (11) pouvant être déplacée dans la partie principale de fermeture (8) entre une position de fermeture, dans laquelle elle ferme l'orifice de passage (13) en coopérant avec un deuxième siège de soupape (14), et une position ouverte libérant l'orifice de passage (13), et la partie auxiliaire de fermeture (11) présentant des moyens qui ferment au moins partiellement dans sa position ouverte l'orifice (12) entre la chambre de soupape (10) et la chambre de pression (3), soupape caractérisée en ce que la partie auxiliaire de fermeture (11) présente un espace de connexion (19), qui ne débouche dans l'orifice (12) entre la chambre de soupape (10) et la chambre de pression (3) que dans la position de fermeture de la partie auxiliaire de fermeture (11) et en ce qu'au moins une liaison constante (18, 25) existe entre les deux chambres partielles, mais seulement par l'intermédiaire de la chambre de liaison (19).

2. Soupape selon la revendication 1, dans laquelle l'une des deux positions terminales de la partie principale de fermeture (8) est une position de sécurité, caractérisée en ce qu'au moins le propre poids de la partie auxiliaire de fermeture (11) agit comme moyen de commande vers la position de sécurité

3. Soupape selon la revendication 2, caractérisée en ce que la soupape est réalisée de telle manière que lorsque la partie auxiliaire de fermeture (11) est fermée, son propre fluide déplace la partie principale de fermeture (8) vers sa position de sécurité.

4. Soupape selon l'une des revendications 1 à 3, caractérisée en ce que les moyens de commande sont constitués au moins par un électro-aimant et au moins un ressort qui agit sur lui.

5. Soupape selon la revendication 4, caractérisée en ce que le ressort agit en direction de la position de sécurité.

6. Soupape selon la revendication 1, caractérisée en ce que les moyens présentent une face (16) du type piston qui recouvre, dans la position ouverte de la partie auxiliaire de fermeture (11) l'embouchure de l'orifice (12) en direction de la chambre de soupape (10).

EP 0 195 206 B1

Fig. 2

Fig. 1